# EUROPEAN PATENT APPLICATION

(11) **EP 4 159 652 A1**
(43) Date of publication of application: **05.04.2023**
(21) Application number: 21816722.9
(22) Date of filing: 15.02.2021
(51) Int. Cl.: B65G 54/02, G01N 35/04

(54) **TRANSPORT APPARATUS AND ANALYSIS SYSTEM**

(30) Priority: 01.06.2020 JP 2020095630
(71) Applicant: HITACHI HIGH-TECH CORPORATION, Tokyo 105-6409 (JP)
(72) Inventor: TAMAKOSHI Takeshi, Tokyo 100-8280 (JP); KANEKO Satoru, Tokyo 100-8280 (JP); KOBAYASHI Hiroyuki, Tokyo 100-8280 (JP); AOYAMA Yasuaki, Tokyo 100-8280 (JP); HOSHI Ryosuke, Tokyo 100-8280 (JP)
(74) Representative: Mewburn Ellis LLP
(86) International application number: PCT/JP2021/005415
(87) International publication number: WO 2021/245990

(57) **Abstract**

A transport device includes: a calculation unit 40 configured to estimate a position of a transport container 20 based on a current value detected by a current detection unit 30; and a storage unit 45 configured to store a current change amount for each of a plurality of magnetic poles 25 when a pulse voltage of a fixed value is applied to respective coils 21 of the plurality of magnetic poles 25 in a state where a permanent magnetic 10 is not on a transport surface. The calculation unit 40 estimates the position of the transport container 20 based on a deviation between a current change amount of a coil 21 acquired at a time of detecting the position of the transport container 20 and the current change amount of the corresponding coil 21 in the state where the permanent magnetic 10 is not present, which is stored in the storage unit 45. This configuration provides a transport device capable of detecting a position of a sample transport carrier with high sensitivity without using a container carrier detection device, and an analysis system including the transport device.

## Description

### Technical Field

The present invention relates to a transport device and an analysis system.

### Background Art

PTL 1 discloses, as an example of a laboratory sample delivery system having high transport performance, "a laboratory sample delivery system including: a number of container carriers each including at least one magnetically active device, preferably at least one permanent magnet, and adapted to carry a sample container; a transport plane adapted to transport the container carriers; and a number of electromagnetic actuators disposed below the transport plane in a stationary manner and adapted to move the container carriers above the transport plane by applying a magnetic force to the container carriers."

### Citation List

### Patent Literature

PTL 1: Japanese Patent No. 6072052

### Summary of Invention

### Technical Problem

In a specimen analysis system for clinical examinations, for example, biological samples (samples) such as blood, plasma, serum, urine, and other body fluids (hereinafter referred to as "specimens") are tested for specified analysis items. In this specimen analysis system, devices having a plurality of functions are connected to automatically execute processing in each step. That is, in order to rationalize works in a laboratory, an analysis unit (analysis step) that performs a plurality of kinds of analysis such as biochemical analysis and immunoanalysis, a pretreatment unit (pretreatment step) that performs a plurality of pretreatments required for these kinds of analysis, and the like are connected by a transport line and used as one specimen analysis system.

In recent years, due to sophistication of medical care and aging of patients, the importance of specimen analysis has been increased. Therefore, in order to improve an analysis processing capability of the specimen analysis system, high-speed transport, mass transport, simultaneous transport, and transport in multiple directions of specimens are desired.

As a background of this technical field, a technique described in PTL 1 is provided.

However, regarding the technique described in PTL 1, in the specimen analysis system, a plurality of container carrier detection devices that detect positions of the magnetically active devices provided on specimen transport carriers are required. In addition, since these container carrier detection devices are required to be disposed on a transfer surface side, a dedicated printed circuit board is required. Therefore, there is a problem of resulting complication of the device and an increase in cost.

In view of such circumstances, the invention provides a transport device capable of detecting a position of a specimen transport carrier with high sensitivity without using a container carrier detection device, and an analysis system including the transport device.

### Solution to Problem

The invention includes a plurality of manners for solving the above-described problems, and one example of these manners is a transport device for transporting a transport container provided with a magnetic body to a target position, the transport device includes: a plurality of magnetic poles each including a core and a coil wound around an outer circumferential side of the core; a drive unit configured to apply a voltage to the respective coils of the plurality of magnetic poles; a current detection unit configured to detect a current value flowing through the coil; a calculation unit configured to estimate a position of the transport container based on the current value detected by the current detection unit; and a storage unit configured to store a current change amount for each magnetic pole when a pulse voltage of a fixed value is applied to the coils of the plurality of magnetic poles in a state where the magnetic body is not on the transport surface. In the transport device, the calculation unit estimates the position of the transport container based on a deviation between a current change amount of a coil acquired at a time of detecting the position of the transport container and the current change amount of the corresponding coil in the state where the magnetic body is not present, which is stored in the storage unit.

### Advantageous Effects of Invention

According to the invention, a position of a specimen transport carrier can be detected with high sensitivity without using a container carrier detection device. Problems, configurations, and effects other than those described above will be clarified with the following description of embodiments.

### Brief Description of Drawings

[FIG. 1] FIG. 1 shows a schematic configuration of a transport device according to a first embodiment of the present invention.
[FIG. 2] FIG. 2 is a schematic diagram showing an example of a specific configuration of a current detection unit of the transport device according to the first embodiment.
[FIG. 3] FIG. 3 is a top view showing a schematic configuration example of a transport surface on which magnetic poles are disposed in the transport device according to the first embodiment.
[FIG. 4] FIG. 4 is a schematic diagram showing a partial cross-sectional configuration example of the transport device shown in FIG. 1.
[FIG. 5] FIG. 5 is a diagram showing an example of a relationship between a voltage waveform applied to a specific magnetic pole and a corresponding current waveform in the transport device according to the first embodiment.
[FIG. 6] FIG. 6 is a diagram showing an example of a relationship between a voltage waveform applied to a magnetic pole different from the magnetic pole according to FIG. 5 and a corresponding current waveform in the transport device according to the first embodiment.
[FIG. 7] FIG. 7 is a diagram showing a relationship when a distance from the specific magnetic pole is set as a horizontal axis, and a current change amount is set as a vertical axis in the transport device according to the first embodiment.
[FIG. 8] FIG. 8 is a diagram showing a current waveform detected by a current detection unit when the same voltage waveform is applied to different magnetic poles.
[FIG. 9] FIG. 9 is a diagram showing a current waveform detected by the current detection unit when the same voltage waveform is applied to different magnetic poles.
[FIG. 10] FIG. 10 is a diagram showing a variation of a current change amount detected by the current detection unit when the same voltage waveform is applied to different magnetic poles.
[FIG. 11] FIG. 11 is a diagram showing a relationship of a distance between the magnetic pole and a transport container and the current change amount when a pulse voltage is applied, which is stored in a storage unit of a transport device according to a second embodiment of the present invention.
[FIG. 12] FIG. 12 is a diagram showing a relationship of a distance between a magnetic pole different from that in FIG. 11 and the transport container and the current change amount when the pulse voltage is applied, which is stored in the storage unit of the transport device according to the second embodiment.
[FIG. 13] FIG. 13 is a schematic diagram showing a position detection characteristic indicating a difference in current change amount between a case where a magnetic body is present in the vicinity and a case where no magnetic body is present in the vicinity in the transport device according to the second embodiment.
[FIG. 14] FIG. 14 is a top view showing a schematic configuration example of a transport surface of a transport device according to a third embodiment of the present invention and a magnetic pole position at an outermost periphery of the transport surface.
[FIG. 15] FIG. 15 is a diagram showing a schematic configuration example of an analysis system according to a fourth embodiment of the present invention.
[FIG. 16] FIG. 16 is a block diagram showing a configuration example of a control circuit of transport devices constituting a transport path of the analysis system according to the fourth embodiment.

### Description of Embodiments

Hereinafter, embodiments of a transport device and an analysis system according to the invention will be described with reference to the drawings. In the drawings used in this description, the same or corresponding components are denoted by the same or similar reference numerals, and repeated descriptions of these components may be omitted.

### <First Embodiment>

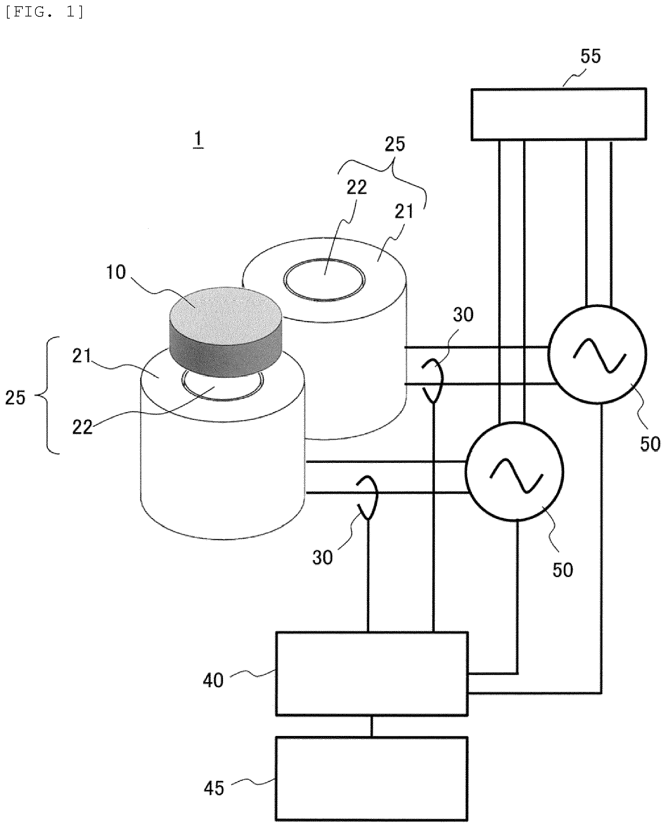

A first embodiment of a transport device according to the invention will be described with reference to FIGS. 1 to 10.

First, an overall configuration and a configuration of each unit of the transport device will be described with reference to FIGS. 1 to 7.

### <Schematic Configuration of Transport Device>

FIG. 1 is a diagram showing a schematic configuration of a transport device 1 according to the present embodiment. FIG. 1 schematically shows an outline of a transport device in which two adjacent magnetic poles 25 and a permanent magnet 10 move relative to each other.

The transport device 1 according to the present embodiment as shown in FIG. 1 is preferably used in an analysis system such as a specimen analysis device that performs specimen analysis or a specimen pretreatment apparatus that performs pretreatments necessary for this analysis.

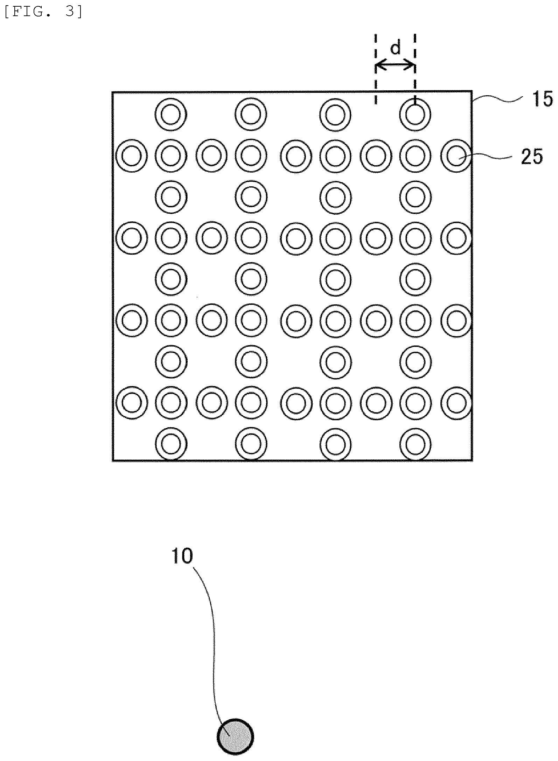

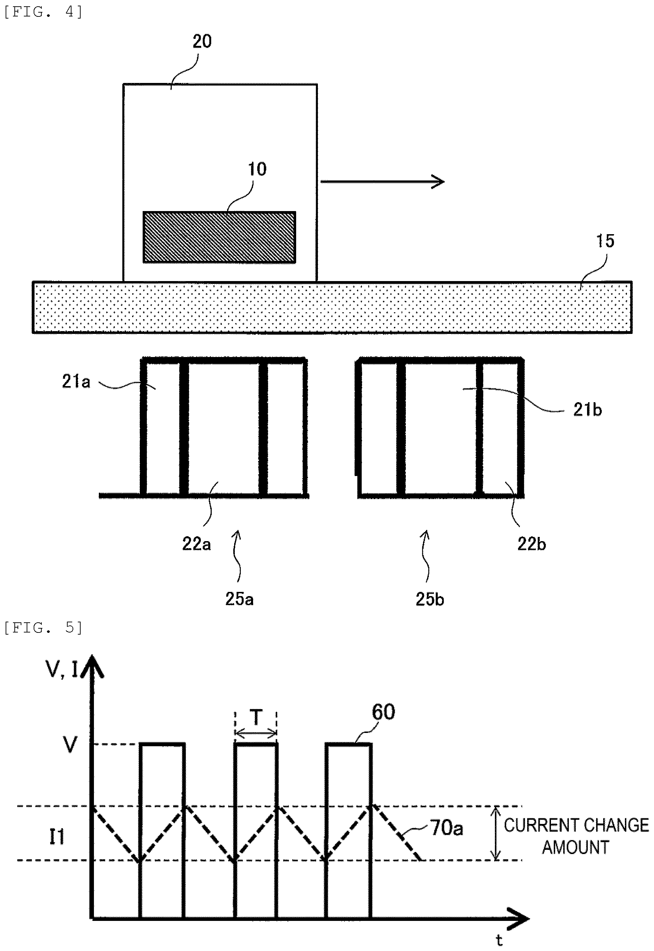

The transport device 1 is a device for transporting a transport container 20 (see FIG. 4) including the permanent magnet (magnetic body) 10 to a target position, and includes a transport surface 15 (see FIG. 3 and the like) on which the transport container 20 is transported, the magnetic poles 25, drive units 50 that drive the transport container 20, current detection units 30, a calculation unit 40, and a power supply 55.

The permanent magnet 10 is provided in the transport container 20. A permanent magnet such as neodymium or ferrite is used for the permanent magnet 10. In the first embodiment, the permanent magnet 10 is used for description, but other magnets or soft magnetic bodies may be used instead of the permanent magnet 10. In addition, the permanent magnet 10 and a soft magnetic body may be used in combination.

Usually, the transport surface 15 that supports the permanent magnet 10 is provided between the magnetic pole 25 and the permanent magnet 10, and the permanent magnet 10 moves on the transport surface 15 in a sliding manner.

As shown in FIG. 1, the transport device 1 is provided with at least two magnetic poles 25. Each magnetic pole 25 has a core 22 made of a magnetic body and a coil 21 wound around an outer periphery of the core 22. In each magnetic pole 25, the cylindrical core 22 is disposed so as to face the permanent magnet 10 with the transport surface 15 interposed therebetween. Such magnetic poles 25 are arranged in a plurality of rows and a plurality of columns to form a transport path.

A magnetic body called a yoke that connects each magnetic pole 25 may be provided on a surface of each magnetic pole 25 opposite to the transport surface 15 side.

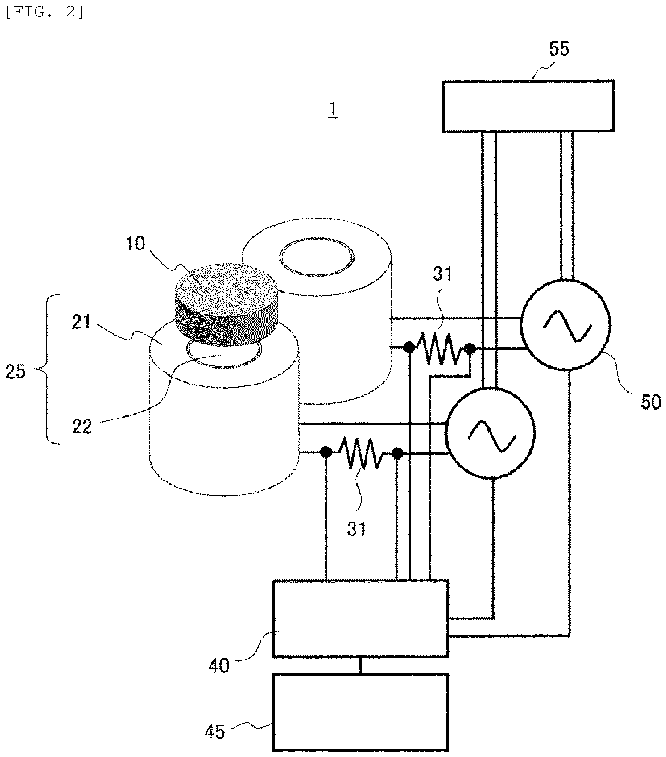

FIG. 2 is a schematic diagram showing a specific configuration example for current detection. As shown in FIGS. 1 and 2, the current detection unit 30 is a portion that is provided between the coil 21 and the drive unit 50 and detects a current flowing through the coil 21, and for example, is a resistor 31 that detects the current flowing through the coil 21 as shown in FIG. 2.

In addition to the series resistor 31, the current detection unit 30 may be, for example, a portion using a current transformer, a portion in which a Hall current sensor is used, or the like, and is not limited to these.

The drive unit 50 is connected to the power supply 55 which is an AC power supply or a DC power supply such as a battery, receives a current from the power supply 55, and applies a voltage to each of the coils 21 of the magnetic poles 25 to move the transport container 20.

The calculation unit 40 calculates a relative positional relationship between the core 22 and the permanent magnet 10 based on a current value detected by the current detection unit 30 and calculates a position of the permanent magnet 10 within the transport device 1. In addition, the calculation unit 40 determines a timing of supplying a current necessary for driving the permanent magnet 10 from the drive unit 50 using calculated positional information of the permanent magnet 10, and causes an appropriate coil 21 to supply the current.

A storage unit 45 is a storage medium in which various parameters and set values for controlling operations of each instrument of the transport device 1, various computer programs for executing various kinds of display processing, and the like are stored, and is formed by a semiconductor memory such as a flash memory, a magnetic disk such as an HDD, or the like.

The storage unit 45 of the present embodiment particularly stores a current change amount for each magnetic pole 25 when a pulse voltage of a fixed value is applied to the coils 21 of the plurality of magnetic poles 25 in a state where the permanent magnet 10 is not on the transport surface. Details thereof will be described later.

The calculation unit 40 and the storage unit 45 may be implemented by software running on a general-purpose computer, or may be implemented by dedicated hardware or a combination of software and hardware.

### <Configuration Example of Transport Surface 15>

FIG. 3 is a top view showing a schematic configuration example of a transport surface on which the magnetic poles 25 of the transport device 1 are disposed. In FIG. 3, the magnetic poles 25 of four rows and four columns are arranged in a lattice pattern to form a transport path. The transport path is set so as to extend over the magnetic poles 25 arranged in the lattice pattern.

In the transport device 1, a voltage is applied to the coils 21 of the magnetic poles 25 to excite the magnetic poles 25 based on a target transport path. As a result, the permanent magnet 10 disposed in the transport container 20 slides above the plurality of magnetic poles 25 (between the magnetic poles 25) and on the transport surface 15, so that the transport container 20 equipped with the permanent magnet 10 can be transported in any desired direction.

When one magnetic pole 25 is excited, the transport containers 20 on the magnetic poles 25 vertically or horizontally adjacent to the magnetic pole 25 are attracted, and when the magnetic poles 25 are densely laid out, the plurality of transport containers 20 are likely to collide with each other, and therefore, as shown in FIG. 3, it is desirable that the transport path has a lattice pattern with one column skipping and one row skipping. With such an arrangement, the magnetic poles 25 can be omitted in an area outside the transport path, and reduction in component cost and in weight can be achieved.

### <Partial Cross-sectional Configuration Example of Transport Surface 15>

FIG. 4 is a schematic diagram showing a partial cross-sectional configuration example of the transport device 1 shown in FIG. 1. The transport container 20 such as a specimen holder has a configuration in which a holding portion of a specimen container that holds a specimen and the permanent magnet 10 are integrated. The transport container 20 is disposed to face the magnetic pole 25 with the transport surface 15 interposed therebetween.

In the transport device 1, relative positional information between the permanent magnet 10 and the magnetic poles 25 is required. The positional information is used to allow an electromagnetic force, which is generated in the core 22 by applying a current to the coil 21 of the magnetic pole 25, to act efficiently on the permanent magnet 10, and to move the permanent magnet 10 in a desired direction.

For example, a case is assumed where the permanent magnet 10 is located above (right above) one of the two magnetic poles 25. The permanent magnet 10 does not generate a thrust force in a transport direction even if a voltage is applied to a coil 21a of a magnetic pole 25a directly below the permanent magnet 10.

On the other hand, when a voltage is applied to a coil 21b of a magnetic pole 25b that is not above (right above) the permanent magnet 10, a force that attracts the permanent magnet 10 to the magnetic pole 25b is generated, and the thrust force in the transport direction is generated.

That is, by applying the voltage to the coil 21 of the desired magnetic pole 25, the permanent magnet 10 can efficiently generate a force in the transport direction. Then, by selecting the coil 21 of the magnetic pole 25 to which the voltage is applied, an orientation (direction) of the force in the transport direction can be controlled.

### <Principle of Position Detection of Transport Container 20>

Position detection of the transport container 20 on the transport path will be described. When the permanent magnet 10 is present above the magnetic pole 25 on a near side in FIG. 1, a magnetic field generated by the permanent magnet 10 acts on the magnetic pole 25.

Here, a magnetic field acting on the magnetic pole 25 closer to the permanent magnet 10 and a magnetic field acting on the magnetic pole 25 farther from the permanent magnet 10 have different magnitudes. That is, the magnitude of the magnetic field acting on the magnetic pole 25 changes depending on a relative position between the permanent magnet 10 and the magnetic pole 25.

The core 22 is formed of a magnetic body, and has a property that a magnetic flux passing through the core 22 becomes difficult to pass as the magnetic flux increases. Here, when a voltage is applied to the coil 21 to flow a current, a magnetic flux (magnetic field) generated by the current is generated in the core 22. Therefore, in the core 22, a magnetic flux caused by the permanent magnet 10 and a magnetic flux generated by the current flowing through the coil 21 are generated.

In general, when a current flows through the coil 21, a magnetic field is generated around the coil 21, and the generated magnetic flux is proportional to a current value flowing through the coil 21. This proportional constant is called inductance. However, in a circuit including a magnetic body such as the core 22, the inductance changes due to a saturation characteristic of the core 22.

When the core 22 saturates, the inductance changes according to a magnitude of the magnetic flux generated in the core 22. That is, the inductance of the coil 21 changes depending on the magnitude of the magnetic flux of the permanent magnet 10. This means that the inductance of the coil 21 changes depending on the position of the permanent magnet 10. That is, when there is a magnetic field from the permanent magnet 10, magnetic saturation occurs in the coil 21 and magnetic permeability decreases, and therefore, the current flowing through the coil 21 changes.

Therefore, when a voltage is applied to the coil 21, inductance L can be obtained by calculation by detecting the current flowing through the coil 21 and how the current flows. That is, by detecting the inductance L of the coil 21, which changes depending on the position of the permanent magnet 10, the position of the permanent magnet 10 at which the inductance of the coil 21 is affected can be obtained.

Therefore, the drive unit 50 is connected to the coil 21 of the magnetic pole 25, and the current detection unit 30 that detects the current value flowing through the coil 21 is provided (for example, a resistor is disposed). Then, the drive unit 50 applies a voltage to the coil 21, the current detection unit 30 detects a current value generated by the voltage, and the calculation unit 40 reads the value.

### <Voltage Waveform Applied to Coil 21 and Detected Current Waveform>

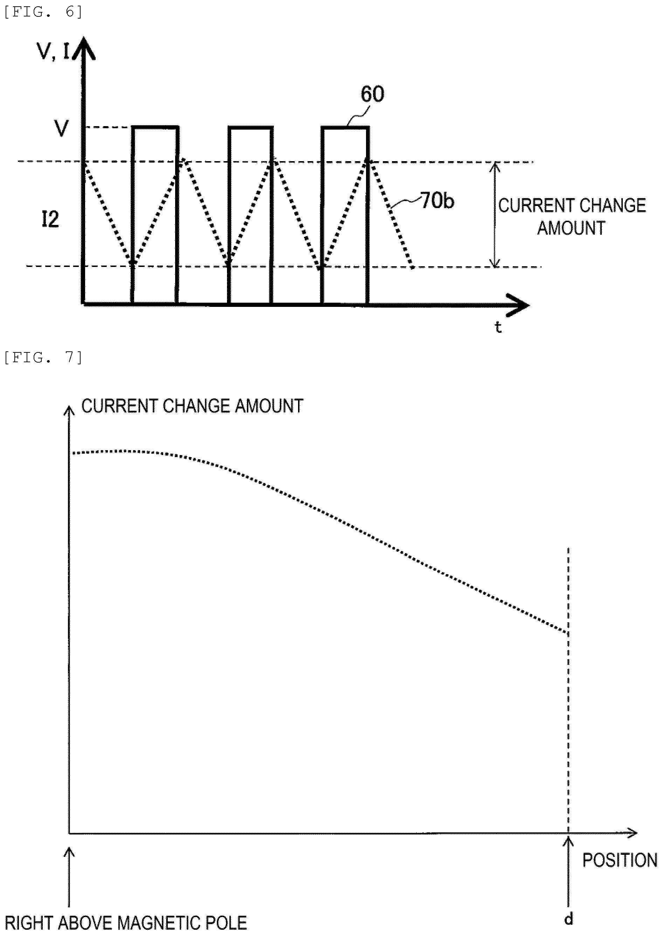

A voltage waveform, which is applied to the coil 21 in order to detect the position of the transport container, and a corresponding current waveform in the transport device 1 will be described. FIGS. 5 and 6 are diagrams showing the voltage waveform applied to the coil in order to detect the position of the transport container 20 by the transport device 1 according to a basic principle and the current waveform corresponding to the voltage waveform.

A magnitude (V) and a pulse width (T) of a voltage pulse 60 shown in FIGS. 5 and 6 are determined by how much a voltage is applied to the magnetic pole 25. Then, when the permanent magnet 10 of the transport container 20 approaches the magnetic pole 25, magnetic saturation of the magnetic pole 25 causes a change from a current waveform 70a to a current waveform 70b.

The transport device 1 includes the current detection unit 30 that detects a current, and is capable of detecting the position of the transport container 20 based on the current value detected by the current detection unit 30 and measured by the calculation unit 40. That is, the position of the transport container 20 is detected by detecting a change amount of a rising or falling current of a position detection pulse detected by the current detection unit 30.

As shown in FIG. 5, when the magnetic pole 25 is not affected by the permanent magnet 10 of the transport container 20, the current change amount is I1. On the other hand, as shown in FIG. 6, when the magnetic pole 25 is affected by the permanent magnet 10 of the transport container 20, for example, when the permanent magnet 10 is located right above or near the magnetic pole 25, the current change amount is I2, which is greater than I1.

### <Relationship between Distance from Selected Magnetic Pole 25 and Current Change Amount>

FIG. 7 is a graph in which a distance from the transport container 20 and a selected nearest magnetic pole 25 is set as a horizontal axis, and a current change amount is set as a vertical axis in the transport device. This makes it possible to know the distance from the selected magnetic pole 25 corresponding to the current change amount.

As described above, the position detection (position estimation) of the transport container 20 can be performed using a coil current (or current flowing through a shunt resistor).

### <Differences in Current Change Amount for Each Magnetic Pole 25 and Handling Method thereof>

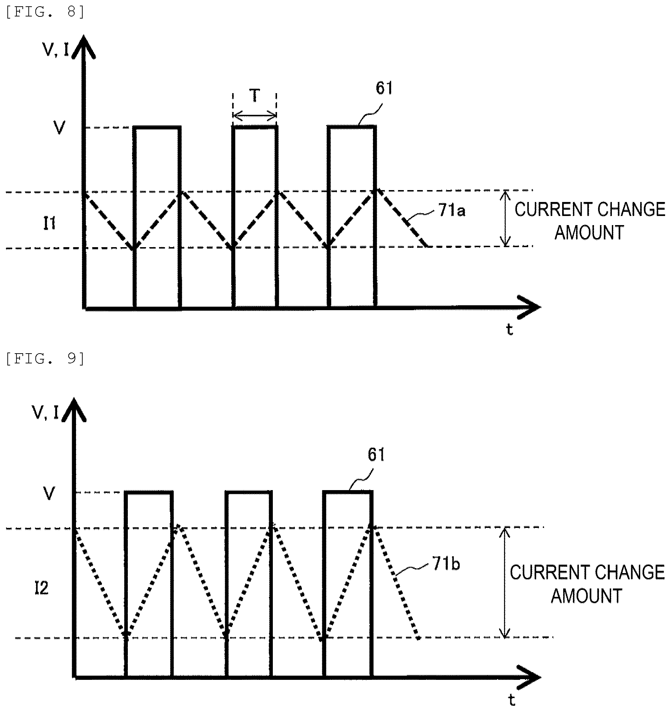

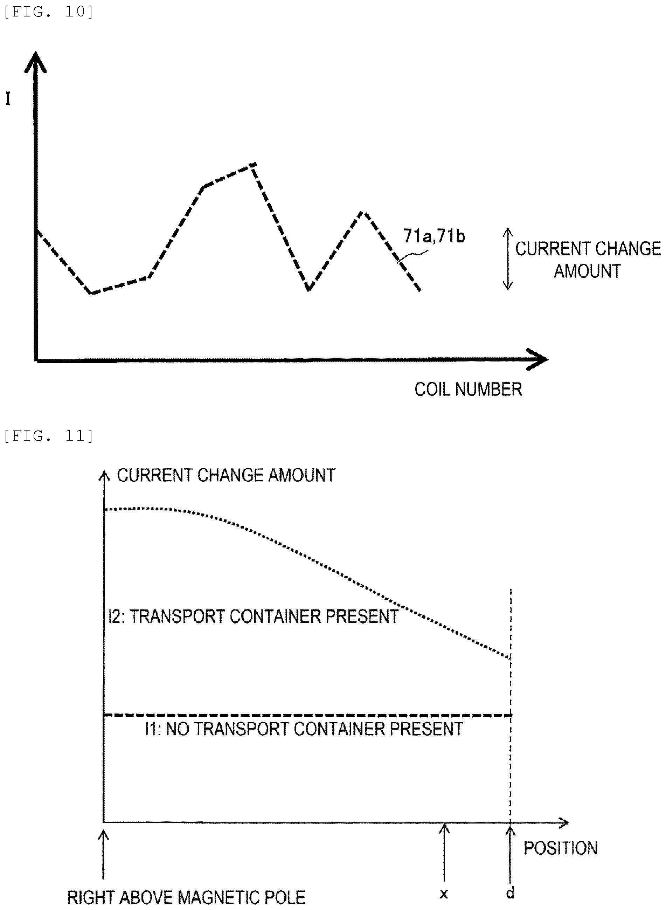

FIGS. 8 and 9 are diagrams showing current waveforms detected by the current detection unit when the same voltage waveform is applied to different magnetic poles. FIG. 10 is a diagram showing a variation of a current change amount detected by the current detection unit when the same voltage waveform is applied to different magnetic poles.

As described above, the plurality of magnetic poles 25 are used to drive the transport container 20 on the transport surface 15, but there are variations among the plurality of magnetic poles 25, and electrical characteristics are not exactly the same.

For example, not only variations in characteristics of the coil 21 itself such as resistance and inductance, but also variations in characteristics of units constituting a magnetic circuit such as the core 22 and the yoke, and furthermore variations in characteristics of circuit elements used in the drive unit 50 that supplies a current to the coil 21 and the current detection unit 30 are inevitably present.

The principle of position detection based on the current change amount described above can be applied as it is when the variation between the magnetic poles 25 is small. On the other hand, the present inventors have found that an error may occur when detecting the position in a case where the variation between the magnetic poles 25 is large. In such a case, the error caused by the variation is solved by the following configuration.

As shown in FIGS. 8 and 9, although voltage pulses 61 having the same waveform are applied to different coils 21, current change amounts (amplitudes) 71a and 71b detected by the current detection unit 30 are highly likely to be different.

FIG. 10 is a diagram showing a variation in a current change amount detected by the current detection unit 30 when voltage pulses 61 having the same waveform are applied to the coils 21 of the magnetic poles 25 in the transport device 1. The horizontal axis indicates a coil number, and the vertical axis indicates a corresponding current change amount.

As shown in FIG. 10, it has been found that electrical characteristics of the magnetic poles 25 are very unlikely to be the same, and there is room for improvement in detection accuracy when arithmetic processing for position detection is performed on an assumption that all the magnetic poles 25 have the same electrical characteristics.

Therefore, it is assumed that a relationship of the current change amount with respect to a distance between the magnetic pole 25 and the permanent magnet 10 is different for each of the coils 21 of the plurality of magnetic poles 25 arranged in the device, and the relationship of the current change amount with respect to the distance between the magnetic pole 25 and the permanent magnet 10 shown in FIG. 7 is individually acquired in advance for all the magnetic poles 25 and stored in the storage unit 45 as different ones.

Then, the calculation unit 40 performs position estimation processing based on the relationship of the current change amount with respect to the distance between each magnetic pole 25 and the permanent magnet 10, which is stored in the storage unit 45, when estimating the position of the transport container 20 based on a deviation between a current change amount of the coil 21 of the magnetic pole 25 acquired at a time of detecting the position of the transport container 20 and a current change amount of the coil 21 of the corresponding magnetic pole 25 in the state where the permanent magnet 10 is not present, which is stored in the storage unit 45.

In this way, by using information of the corresponding position detection characteristic for each coil 21 of the magnetic poles 25 used to detect the position of the transport container 20, the variation in the characteristics of the magnetic poles 25 can be absorbed. Instead, it is necessary to evaluate in advance the characteristic shown in FIG. 7 described according to a basic principle for all the magnetic poles 25, and hold the information of such a characteristic.

This method can be performed using, for example, a method of actually using a transport container to acquire current characteristics for all the magnetic poles 25, or a jig in which the same number of permanent magnets are arranged at the same positions as the magnetic poles 25, or the like.

Here, when transporting the transport container 20, the transport is not performed by applying only a pulse voltage having a single fixed value, but an absolute value and a duty ratio of a pulse voltage to be applied may be changed as appropriate according to a transport speed, a transport distance, and transport settings.

Therefore, the relationship of the current change amount with respect to the distance between the magnetic pole 25 and the permanent magnet 10 for each magnetic pole 25, which is stored in the storage unit 45, is not necessary to be a pulse voltage having a single fixed value, and for all of the coils 21 of the plurality of magnetic poles 25, it is desirable to apply in advance pulse voltages having different duty ratios and fixed values or pulse voltages having different voltage magnitudes, obtain a current change amount for each magnetic pole 25 at that time, and store the obtained current change amount in the storage unit 45.

Next, effects of the present embodiment will be described.

The above-described transport device 1 according to the first embodiment of the invention is a device that transports the transport container 20 provided with the permanent magnet 10 to a target position, the transport device 1 includes: the plurality of magnetic poles 25 including the core 22, 22a, or 22b, and the coil 21 wound around an outer circumferential side of the core 22, 22a, or 22b; the drive unit 50 that applies a voltage to the respective coils 21 of the plurality of magnetic poles 25; the current detection unit 30 that detects the current value flowing through the coil 21; the calculation unit 40 that estimates the position of the transport container 20 based on the current value detected by the current detection unit 30; and the storage unit 45 that stores the current change amount for each magnetic pole 25 when the pulse voltage of the fixed value is applied to the coils 21 of the plurality of magnetic poles 25 in a state where the permanent magnet 10 is not on the transport surface. In the transport device 1, the calculation unit 40 estimates the position of the transport container 20 based on the deviation between the current change amount of the coil 21 acquired at the time of detecting the position of the transport container 20 and the current change amount of the corresponding coil 21 in the state where the permanent magnet 10 is not present, which is stored in the storage unit 45.

As a result, in the transport device 1 that detects the transport container 20 based on the current change amount without using a detection device, it is possible to absorb the difference in the electrical characteristic of each of the plurality of magnetic poles 25 constituting the transport device 1, and achieve the low-cost sensorless transport device 1 with high reliability due to high sensitivity.

In addition, the storage unit 45 stores the relationship of the current change amount with respect to the distance between the magnetic pole 25 and the permanent magnet 10, so that the distance between the magnetic pole 25 and the permanent magnet 10 can be specified with higher accuracy, and the position of the transport container 20 can be detected with higher accuracy.

Furthermore, the storage unit 45 stores the current change amount when a pulse voltage having a different duty ratio and a fixed value is applied to the coil 21, so that the position detection can be performed with higher accuracy according to settings during actual transportation.

In particular, the storage unit 45 stores the relationship of the current change amount with respect to the distance between the magnetic pole 25 and the permanent magnet 10 for each pulse voltage having a different duty ratio and a fixed value, so that the distance between the magnetic pole 25 and the permanent magnet 10 can be specified with higher accuracy for each magnetic pole 25.

In addition, the relationship of the current change amount with respect to the distance between the magnetic pole 25 and the permanent magnet 10, which is stored in the storage unit 45, is different for each of the plurality of coils 21 arranged in the device, and therefore, accuracy of position detection in all the magnetic poles 25 can be made very high, and more reliable transportation can be achieved.

### <Second Embodiment>

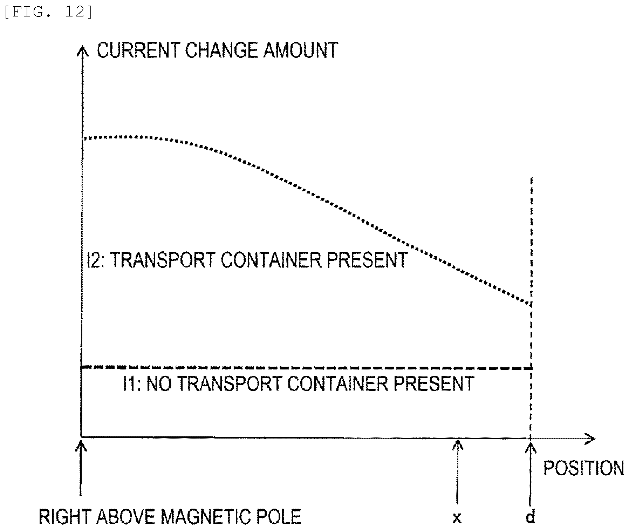

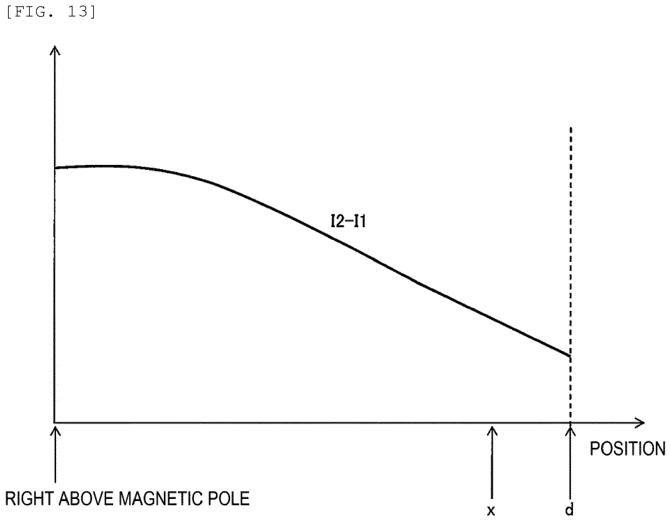

A transport device according to a second embodiment of the invention will be described with reference to FIGS. 11 to 13. FIGS. 11 and 12 are diagrams showing a relationship of a distance between a magnetic pole and a transport container and a current change amount when a pulse voltage is applied. FIG. 13 is a schematic diagram showing a position detection characteristic indicating a difference in a current change amount between a case where a magnetic body is present in the vicinity and a case where no magnetic body is present in the vicinity.

In the transport device 1 according to the present embodiment, unlike the first embodiment, the relationship of the current change amount with respect to the distance between the magnetic pole 25 and the permanent magnet 10, which is stored in the storage unit 45, is common to the plurality of coils 21 arranged in the device.

As described above, in the transport device 1, the plurality of magnetic poles 25 have variations in the electrical characteristics, and therefore, as shown in FIGS. 11 and 12, a current change amount in a case where the transport container 20 is present in the vicinity of the magnetic pole 25 is different from a current change amount in a case where no transport container 20 is present in the vicinity of the magnetic pole 25.

However, the difference in the current change amount between the case where the transport container 20 is present and the case where no transport container 20 is present can be regarded as being substantially the same for each magnetic pole 25 as shown in FIG. 13.

That is, the position detection characteristic indicating the difference between the case where the transport container 20 is present and the case where no transport container 20 is present can be dealt with by acquiring such a position detection characteristic for at least one coil 21 in advance before shipping a product.

Other than that, it is only necessary to obtain in advance a current change amount at each coil position in a state where no transport container is present on the transport surface, as shown in FIG. 10.

Specifically, all the coils 21 in the transport device 1 are excited according to a predetermined procedure, and the current change amount in the transport device 1 is acquired and stored in the storage unit 45. Regarding a scanning order of the coils 21, the arrangement of the coils 21 may be scanned continuously as shown in FIG. 7, or may be scanned randomly. Alternatively, parallel processing may be performed by exciting the plurality of coils 21 at the same time to shorten a processing time.

A timing of acquiring these relationships may be before product shipment, or at the time of initializing or resetting the transport device 1. Alternatively, even if there is a transport container 20 on the transport surface 15, if no transport container 20 is present around a position of a coil 21 of interest, the relationship acquisition will not be affected, and therefore, the relationship acquisition may be performed periodically at a timing when no transport container 20 is present around the position of the coil 21 of interest.

Other configurations and operations are substantially the same as the configurations and operations of the transport device according to the first embodiment described above, and details thereof are omitted.

The transport device according to the second embodiment of the invention also exerts substantially the same effects as that of the transport device according to the first embodiment described above.

In addition, the relationship of the current change amount with respect to the distance between the magnetic pole 25 and the permanent magnet 10, which is stored in the storage unit 45, is common for the plurality of coils 21 arranged in the device, and therefore, compared to the transport device 1 according to the first embodiment, man-hours for setting can be reduced, and a transport device 1 having a lower cost than that of the first embodiment can be obtained.

### <Third Embodiment>

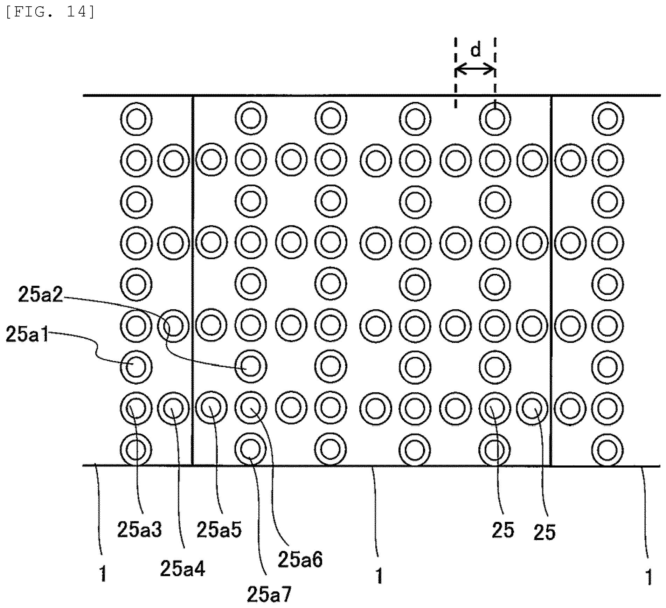

A transport device according to a third embodiment of the invention will be described with reference to FIG. 14. FIG. 14 is a top view showing a schematic configuration example of a transport surface of the transport device according to the third embodiment and magnetic pole positions at an outermost periphery of the transport surface.

As shown in FIG. 14, among the magnetic poles 25 on the transport surface 15 of one transport device 1, a magnetic pole 25a4 and magnetic poles 25a5 and 25a7 at the outermost periphery are located near boundaries of the transport surface 15, other magnetic poles 25a1 and 25a3 and magnetic poles 25a2 and 25a6 change discontinuously in a magnetic circuit configuration having a shape of an iron core or the like, such as the core 22 and the yoke connecting a back side of the transport surface 15 of each core 22.

Therefore, the magnetic poles 25a4, 25a5, and 25a7 at the outermost periphery of the transport surface may differ from the magnetic poles 25a1, 25a2, 25a3, and 25a6 at other positions in the current change amount (position detection characteristic) with respect to the position of the transport container 20. When the difference is large, with the adjustment as in the second embodiment, there remains room for improving the accuracy of the position detection of the transport container 20 by the magnetic poles 25a4, 25a5, and 25a7 at the outermost periphery of the transport surface 15.

Therefore, in the present embodiment, the relationship of the current change amount with respect to the distance between the magnetic pole 25 and the permanent magnet 10 is stored in the storage unit 45 as different relationships for a coil 21 located at an end portion of the transport surface 15 and for other coils 21 among the plurality of coils 21 arranged in the device.

In the present embodiment, prior to the product shipment, the position detection characteristic (see FIG. 13) indicating the difference between the case where the transport container 20 is present and the case where no transport container 20 is present is acquired for each of the magnetic poles 25a4, 25a5, and 25a7 on at least one boundary of the transport surface 15 and the magnetic pole 25a1 and the like at other positions.

When detecting the position of the transport container 20, for the magnetic poles 25a4, 25a5, and 25a7 at the boundaries of the transport surface 15 and other magnetic poles such as the magnetic pole 25a1, corresponding position detection characteristics are used respectively.

Other configurations and operations are substantially the same as the configurations and operations of the transport device according to the first embodiment described above, and details thereof are omitted.

The transport device according to the third embodiment of the invention also exerts substantially the same effects as that of the transport device according to the first embodiment described above.

In addition, the relationship of the current change amount with respect to the distance between the magnetic pole 25 and the permanent magnet 10, which is stored in the storage unit 45, is different for the coil 21 located at the end portion of the transport surface and for other coils 21 among the plurality of coils 21 arranged in the device, and therefore, the variation in the electrical characteristic can be corrected relatively easily compared to the second embodiment, and the position of the transport container 20 can be detected with high accuracy by all the magnetic poles 25 in the transport surface 15, so that more stable transportation can be achieved. In addition, man-hours for setting are not required as much as in the first embodiment, and cost reduction also can be achieved.

### <Fourth Embodiment>

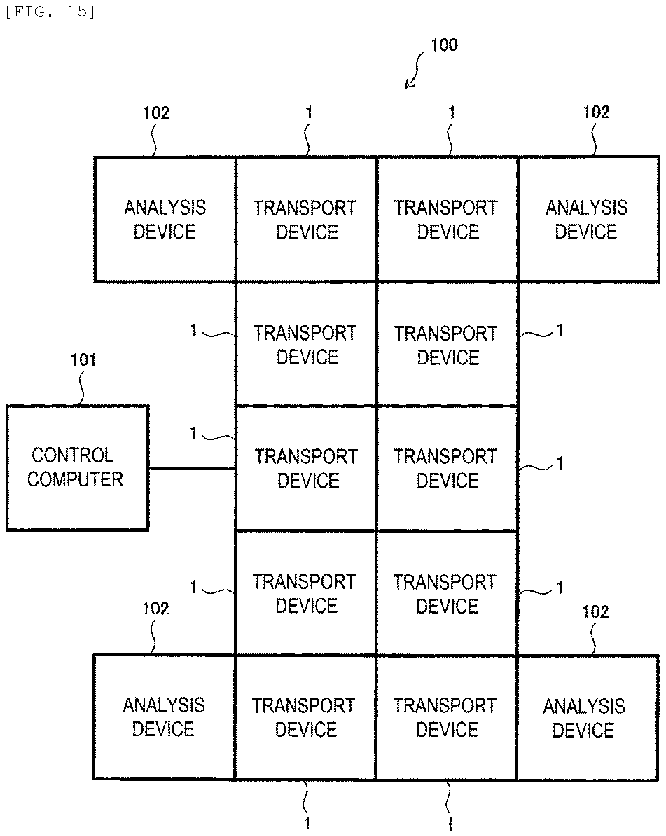

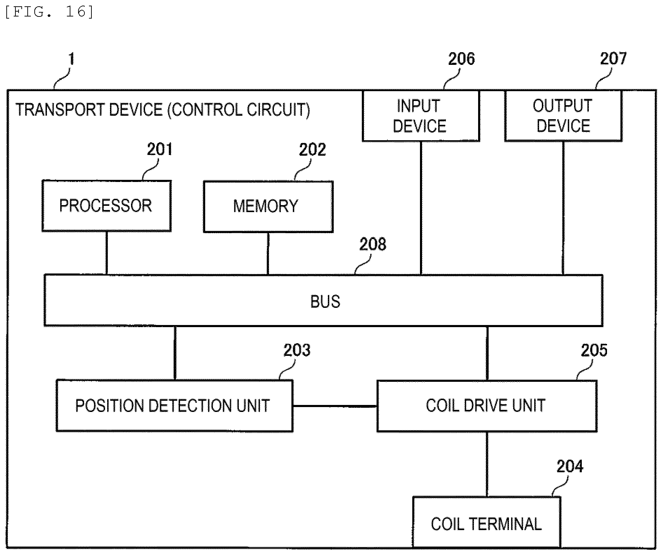

An analysis system according to a fourth embodiment of the invention, to which the transport device according to the first to third embodiments is preferably applied, will be described with reference to FIGS. 15 and 16. FIG. 15 is a diagram showing a schematic configuration example of an analysis system according to the present embodiment, and FIG. 16 is a block diagram showing a configuration example of a control circuit of transport devices constituting a transport path.

FIG. 15 is a diagram showing a schematic configuration example of an analysis system 100 in the present embodiment. The analysis system 100 shown in FIG. 15 includes a control computer 101, a plurality of analysis devices 102, and the plurality of transport devices 1 described in the first embodiment that transports the transport containers 20 between the analysis devices 102.

Numbers of the analysis devices 102 and the transport devices 1 vary depending on a type of a specimen to be analyzed and an analysis content, and may be one or more.

In addition, various specimen pretreatment and post-treatment units that perform pretreatments and posttreatments on a specimen in the transport container 20 are provided. Detailed configurations and the number of the specimen pretreatment and post-treatment units are not particularly limited, and one or more configurations of a known pretreatment device can be adopted.

The control computer 101 controls the entire system, such as designation of a transport path on which the transport container 20 is transported and an analysis order. In addition, the control computer 101 performs a designated operation in response to an instruction input from an operator.

FIG. 16 is a block diagram showing a configuration example of a control circuit of an individual transport device 1 constituting a transport path of the analysis system 100. The control circuit of the transport device 1 shown in FIG. 16 includes a processor 201, a memory 202, a position detection unit 203, a coil drive unit 205, an input device 206, and an output device 207, which are connected to each other by a bus 208.

The processor 201 is formed by a CPU, an MPU, and the like. The memory 202 stores various data, operation parameters, and the like. The position detection unit 203 performs calculation for the position detection of the transport container 20. The coil drive unit 205 applies a voltage to a coil terminal 204 to drive the coil 21. The input device 206 is formed by an input and output port for serial communication, parallel communication, and the like, a keyboard, a mouse, a touch panel, and the like. The output device 207 is formed by a display, a printer, and the like.

A corresponding relationship with the transport device 1 shown in FIG. 1 will be described. That is, functions of the position detection unit 203 are included in the calculation unit 40, the memory 202 corresponds to the storage unit 45, and the coil drive unit 205 corresponds to the drive unit 50 described above. A part of the functions of the position detection unit 203 may be achieved by a software program and may be executed by the processor 201.

Other configurations and operations of the transport device are substantially the same as the configurations and operations of the transport device according to the first embodiment described above, and details thereof are omitted. Incidentally, instead of or in addition to the transport device according to the first embodiment, the transport device according to the second or third embodiment can be used.

### <Others>

The embodiments and accompanying drawings show specific embodiments and implementation examples in accordance with principles of the present disclosure, but these embodiments and implementation examples are used for the purpose of understanding the present disclosure, and not used to interpret the present disclosure in a limited way.

It should be understood that the present embodiments are described in sufficient detail to enable a person skilled in the art to implement the present disclosure, but other implementations and forms are also possible, and various modifications in configuration or structure and substitutions of various elements may be made without departing from the technical scope and spirit of the present disclosure. Therefore, the following description should not be interpreted as being limited thereto.

For example, in the embodiments described above, control lines and information lines that are considered to be necessary for description are shown, which do not necessarily indicate all control lines and information lines in a product. All of the configurations may be connected to each other.

In addition, the present disclosure described above can also be implemented by a program code of software that implements the functions of the embodiments. In this case, a storage medium in which the program code is stored is provided to a system or a device, and a computer (or a CPU or an MPU) of the system or the device reads the program code stored in the storage medium.

In this case, the program code itself read from the storage medium implements the functions according to the embodiments described above, and the program code itself and the storage medium storing the program code constitute the present disclosure.

Examples of the storage medium for supplying such a program code include a flexible disk, a CD-ROM, a DVD-ROM, a hard disk, an optical disk, a magnet-optical disk, a CD-R, a magnetic tape, a nonvolatile memory card, and a ROM.

An operating system (OS) or the like running on the computer may perform a part or all of the actual processing based on an instruction of the program code, and the function of the above-described embodiments may be implemented by the processing.

After the program code read from the storage medium is written in a memory of the computer, the CPU or the like of the computer may perform a part or all of the actual processing based on the instruction of the program code, and the functions of the above embodiments may be implemented by the processing.

The program code of the software for achieving the functions according to the embodiments may be stored in a storage unit such as a hard disk or a memory of the system or the apparatus or a storage medium such as a CD-RW or a CD-R by distributing the program code via a network, and the computer (or the CPU or the MPU) of the system or the device may read and execute the program code stored in the storage unit or the storage medium at the time of use.

### Reference Signs List

1: transport device
15: transport surface
10: permanent magnet (magnetic body)
20: transport container
21, 21a, 21b: coil
22, 22a, 22b: core
25, 25a, 25a1, 25a2, 25a3, 25a4, 25a5, 25a6, 25b: magnetic pole
30: current detection unit
31: resistor
40: calculation unit
45: storage unit
50: drive unit
55: power supply
60, 61: voltage pulse
70a, 70b: current waveform
71a, 71b: current change amount (amplitude)
100: analysis system
101: control computer
102: analysis device
201: processor
202: memory
203: position detection unit
204: coil terminal
205: coil drive unit
206: input device
207: output device
208: bus

## Claims

1. A transport device for transporting a transport container provided with a magnetic body to a target position, the transport device comprising:
a plurality of magnetic poles each including a core and a coil wound around an outer circumferential side of the core;
a drive unit configured to apply a voltage to the respective coils of the plurality of magnetic poles;
a current detection unit configured to detect a current value flowing through the coil;
a calculation unit configured to estimate a position of the transport container based on the current value detected by the current detection unit; and
a storage unit configured to store a current change amount for each magnetic pole when a pulse voltage of a fixed value is applied to the coils of the plurality of magnetic poles in a state where the magnetic body is not on the transport surface, wherein
the calculation unit estimates the position of the transport container based on a deviation between a current change amount of a coil acquired at a time of detecting the position of the transport container and the current change amount of the corresponding coil in the state where the magnetic body is not present, which is stored in the storage unit.

2. The transport device according to claim 1, wherein
the storage unit stores a relationship of the current change amount with respect to a distance between the magnetic pole and the magnetic body.

3. The transport device according to claim 1, wherein
the storage unit stores current change amounts when pulse voltages having fixed values of different duty ratios are applied to the coils.

4. The transport device according to claim 3, wherein
the storage unit stores a relationship of a current change amount with respect to a distance between the magnetic poles and the magnetic body for each of the pulse voltages having the fixed values of the different duty ratios.

5. The transport device according to claim 2, wherein
the relationship of the current change amount with respect to the distance between the magnetic pole and the magnetic body, which is stored in the storage unit, is different for each of the plurality of coils arranged in the device.

6. The transport device according to claim 2, wherein
the relationship of the current change amount with respect to the distance between the magnetic pole and the magnetic body, which is stored in the storage unit, is common for the plurality of coils arranged in the device.

7. The transport device according to claim 2, wherein
the relationship of the current change amount with respect to the distance between the magnetic pole and the magnetic body, which is stored in the storage unit, is different between a coil located at an end portion of the transport surface and another coil among the plurality of coils arranged in the device.

8. An analysis system comprising:
the transport device according to any one of claims 1 to 7.
